# DEMANDE DE BREVET EUROPEEN

(11) **EP 0 996 302 A1**
(43) Date de publication de la demande: **26.04.2000**
(21) Numéro de dépôt: 99402529.4
(22) Date de dépôt: 14.10.1999
(51) Int. Cl.: H04Q 7/32

(54) **Procédé de mise à jour à distance du logiciel d'un terminal radiotelephonique**

(30) Priorité: 21.10.1998 FR 9813212
(71) Demandeur: ALCATEL, 75008 Paris (FR)
(72) Inventeur: Henry, Pascal, 75015 Paris (FR); Thil, Hervé, 92100 Boulogne (FR)
(74) Mandataire: Lamoureux, Bernard

(57) **Abrégé**

Procédé pour la mise à jour du logiciel d'un terminal radiotéléphonique (2), de type GSM ou équivalent, par l'intermédiaire d'une station de base (5), radiotéléphonique, auprès duquel le terminal est radiotéléphoniquement localisé, et à partir des données fournies par une plate-forme de programmation (11) intervenant au niveau d'un centre serveur (10) auquel la station de base est reliée dans le cadre d'un réseau fixe de télécommunications.

Une mise à jour de terminal est réalisée par un échange transparent de messages radiotéléphoniques courts, de type SMS ou équivalent, à l'initiative de la plate-forme de programmation et en coopération avec le centre serveur.

## Description

L'invention concerne un procédé destiné à permettre la mise à jour à distance du logiciel d'un terminal radiotéléphonique de réseau cellulaire et plus particulièrement d'un terminal radiotéléphonique mobile de type GSM.

De tels terminaux téléphoniques sont classiquement fournis à leurs utilisateurs avec une programmation déterminée qui est fonction des besoins de ces utilisateurs et des choix faits tant par eux que pour eux.

Pour diverses raisons, il faut pouvoir modifier les programmations après livraison des terminaux à leurs utilisateurs, par exemple à des fins d'amélioration du service rendu, de mise à jour d'éléments logiciels soumis à évolution ou de mise en service d'options nouvelles ou nouvellement requises.

A cet effet, il a été initialement prévu de demander aux utilisateurs d'apporter les terminaux radiotéléphoniques dont ils disposent en un lieu où une mise à jour peut être effectuée, toutefois c'est une solution que l'on s'efforce actuellement d'éviter.

Une autre solution est fournie dans le document EP-A-478231 qui décrit un procédé pour programmer un terminal radiotéléphonique par des signaux transmis par voie radio, depuis un centre serveur de mise à jour, suite à la mise du terminal dans un mode de programmation par l'utilisateur. Cette solution est notamment utilisée pour permettre à des utilisateurs d'obtenir des codes d'autorisation pour des services de mobile spécifiques. Elle convient bien lorsque la demande de mise à jour est effectuée à la demande de l'utilisateur, mais elle n'est pas satisfaisante lorsque cette demande ne provient pas de lui et doit être réalisée le plus tôt possible.

Encore une autre solution est présentée dans la demande de brevet EP-A-562890 qui décrit un procédé de mise à jour d'informations contenues dans une carte SIM d'un terminal mobile de type GSM en utilisant les canaux de signalisation, c'est-à-dire la fonction SMS (*Short Message Service*).

Néanmoins, cette solution présente l'inconvénient majeur de ne pas être sécurisé. Autrement dit, la carte SIM d'un terminal peut être mise à jour, de façon erronée, soit par erreur, soit par malveillance.

Un procédé sécurisé permettant une mise à jour d'un terminal, sans qu'il soit nécessaire de faire intervenir l'utilisateur et sans qu'il soit nécessaire que soit établie une connexion d'appel, serait avantageux.

L'invention propose donc un procédé pour la mise à jour du logiciel d'un terminal radiotéléphonique, de type GSM ou équivalent, par l'intermédiaire d'une station de base, radiotéléphonique, auprès duquel le terminal est radiotéléphoniquement localisé, et à partir d'une plate-forme de programmation intervenant au niveau d'un centre serveur auquel la station de base est reliée dans le cadre d'un réseau fixe de télécommunications.

Selon une caractéristique du procédé selon l'invention, les données de mise à jour de terminal sont transférées par un échange transparent de messages radiotéléphoniques courts, de type SMS ou équivalent, à l'initiative de la plate-forme de programmation et en coopération avec le centre serveur, après authentifications réciproques du terminal cible et de la plate-forme.

Selon une caractéristique d'une forme préférée de mise en oeuvre du procédé selon l'invention, un échange pour mise à jour avec un terminal comporte les opérations suivantes :
- envoi d'un message court d'éveil d'agent, de type MT, à destination du terminal, ce message comportant un en-tête caractéristique de mise à jour et des données pour le rappel radiotéléphonique de la plate-forme par le terminal;
- envoi d'un accusé de réception par message court, de type MO, à destination de la plate-forme par le terminal, suite à la réception d'un message d'éveil, cet accusé de réception contenant le numéro d'appel radiotéléphonique du terminal et une définition synthétique de la présente configuration matérielle et/ou logicielle du terminal;
- envoi d'un ou de plusieurs messages successifs, de type MT, au terminal pour la mise à jour, cet envoi contenant notamment les données de mise à jour, précédées par l'en-tête de mise à jour et par la nouvelle définition synthétique de configuration résultant de la mise à jour.

L'invention, ses caractéristiques et ses avantages sont précisés dans la description qui suit en liaison avec les figures évoquées ci-dessous.

La figure 1 est un schéma synoptique relatif au dispositif permettant de transmettre des messages courts par radio à des terminaux radiotéléphoniques à partir d'un centre serveur dans un système radiotéléphonique.

La figure 2 présente schématiquement les étapes essentielles pour un échange de mise à jour du logiciel d'un terminal selon l'invention par l'intermédiaire d'un centre serveur et à l'initiative d'une plate-forme de programmation.

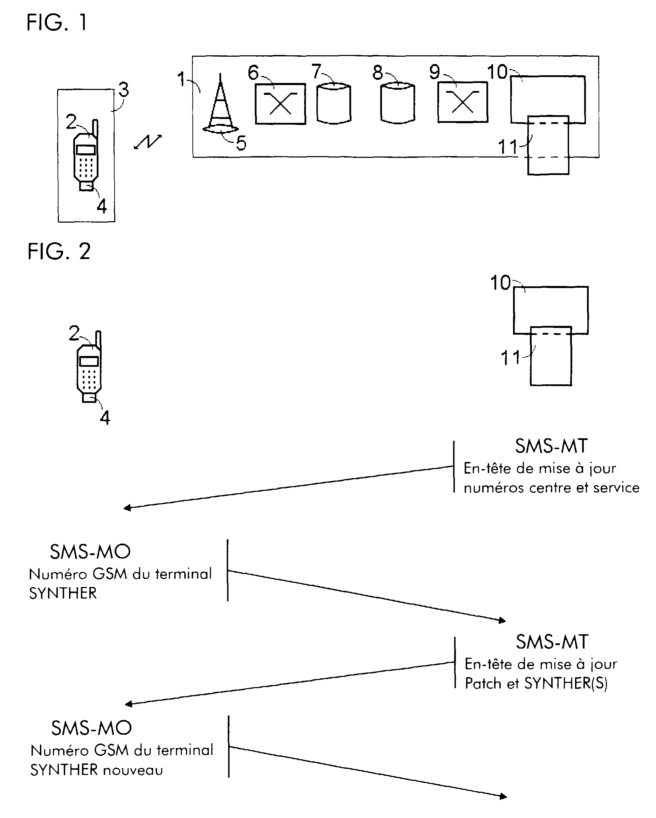

Le système radiotéléphonique 1, schématisé en figure 1, est conçu pour assurer l'établissement de communications, dans le cadre d'un réseau radiotéléphonique, entre des terminaux radiotéléphoniques, tel que le terminal mobile 2. Le procédé selon l'invention est ici décrit dans le cadre d'un réseau radiotéléphonique cellulaire par exemple un réseau GSM, DCS ou PCS.

Le système 1 est supposé permettre la gestion d'un réseau de terminaux radiotéléphoniques 2, et en particulier des communications entre terminaux, il peut aussi permettre la mise en communication des terminaux du réseau avec d'autres terminaux de communication, desservis par d'autres systèmes qui sont reliés de manière appropriée au réseau radiotéléphonique que gère le système 1.

Les terminaux radiotéléphoniques 2 gérés par un même système 1 dans le cadre d'un réseau radiotéléphonique constituent un ensemble 3 relevant classiquement d'un prestataire de service déterminé qui exploite le système 1 pour les opérations relatives aux communications radiotéléphoniques concernant les terminaux 2.

Chaque terminal radiotéléphonique 2 comporte, comme connu et non illustré ici, un émetteur-récepteur radio de signaux numériques ou numérisés incluant une interface d'émission-réception de signaux voix-données, une interface de commande manuelle homme-terminal et un ensemble de commande incorporant au moins un processeur et diverses mémoires, mortes et/ou vives. Le sous-ensemble constitué par ces mémoires stocke une partie des programmes nécessaires au fonctionnement du terminal, une autre partie est classiquement stockée dans un sous-ensemble mémoire comporté par un module d'identification d'abonné 4 amovible que l'utilisateur doit ajouter au terminal pour pouvoir l'exploiter. Un tel module d'identification est par exemple constitué par une carte SIM exploitable en liaison avec l'ensemble de commande du terminal, une fois mise en place.

Dans le cadre de l'invention, il est prévu que les caractéristiques logicielles et matérielles d'un terminal à un instant déterminé soient traduites sous forme d'informations numérisées qui sont mises en mémoire au niveau de ce terminal, c'est-à-dire dans le terminal lui-même et/ou dans le module d'identification qui lui est associé, suivant les cas. Les logiciels des terminaux 2 et des modules d'identification 4 sont réalisés de manière à permettre une transmission radiotéléphonique par un terminal d'informations relatives aux caractéristiques, matérielles et/ou logicielles, présentes de configuration de ce terminal. Ces informations sont combinées pour constituer une définition synthétique de configuration, dite SYNTHER, susceptible d'être émise par le terminal, sous le contrôle de l'ensemble de commande du terminal, suite à une demande émanant du système 1 par voie radiotéléphonique. Dans la forme de réalisation envisagée ici, cette définition de configuration SYNTHER est supposée traduire ces informations sous une forme standardisée qui regroupe les caractéristiques matérielles et logicielles essentielles d'un terminal 2. Elle est supposée transmise dans le cadre de procédures d'échange radiotéléphonique de messages courts qui ne sont pas développées ici dans la mesure où, normalisées, elles ont fait l'objet de diverses publications.

Comme connu, les communications radiotéléphoniques impliquant un terminal 2, dans le cadre du réseau GSM auquel il appartient, s'effectuent par l'intermédiaire d'une station radiotéléphonique de base 5 du système 1 auprès de laquelle ce terminal s'est localisé et à portée radio de laquelle il est situé. Tels seront donc les échanges réalisés aux fins de mise à jour logicielle avec un terminal 2 dans le cadre du procédé selon l'invention.

Pour ces communications, la station de base 5, dite BTS, fait partie d'un des sous-systèmes radio, dit BSS, du système 1. Elle comporte un ou plusieurs équipements émetteurs-récepteurs radio d'interface avec les terminaux 2 et elle est supervisée par un contrôleur de gestion de ressource radio, dit BSC, qui assure aussi un premier niveau de concentration de circuits de communication vers un des centres de commutation de services mobiles 6, dit MSC, d'un sous-réseau fixe de communication, non représenté, du système 1.

Dans le cas du terminal 2 considéré et de la procédure de mise à jour, le centre de commutation 6 concerné est celui qui supervise la station de base 5 auprès de laquelle le terminal 2 est radiotéléphoniquement localisé et sous la responsabilité duquel ce terminal 2 se trouve à ce moment. Une base de données 7, dite VLR, est associée à chaque centre de commutation 6 pour stocker des données, relatives aux terminaux dits présents dans la mesure où ils sont alors radiotéléphoniquement localisés auprès d'une des stations de base supervisées par le centre 6. Comme il est connu, les différents abonnés d'un réseau de type GSM sont aussi répertoriés au niveau d'un enregistreur de localisation nominal 8, dit HLR. Cet enregistreur 8 mémorise les caractéristiques de chaque abonné du réseau et notamment son numéro d'identité international IMSI, son numéro d'annuaire et son profil d'abonnement, et il communique avec les différentes bases 7 du système, dans le cadre des procédures de localisation des différents terminaux par rapport aux stations de base fixes du réseau.

Les centres de commutation 6 du système 1 sont aussi reliés à un centre de commutation 9 ayant une fonction passerelle exploitée pour un service bidirectionnel de messages courts, dits SMS, à destination des terminaux à partir d'un serveur 10, dit SC.

Ce serveur 10 comporte des moyens de communication par lequel il est notamment relié au centre de commutation 9, un ensemble de commande et des moyens de stockage de données en particulier pour la mémorisation des messages courts destinés aux terminaux, de manière à permettre leur conservation jusqu'au moment où ces terminaux sont à même de les recevoir. Cette conservation a notamment lieu lorsqu'un terminal est hors d'atteinte, par exemple lorsqu'il est hors tension ou hors couverture. La communication s'effectue alors dès que le terminal se manifeste d'une manière ou d'une autre au niveau du réseau.

Les messages courts destinés aux terminaux du réseau radiotéléphonique sont susceptibles d'être fournis par différentes sources. Ils comportent classiquement une partie d'en-tête où est notamment identifié le destinataire, une partie prévue pour un volume déterminé de données de commande et une partie prévue pour des données d'affichage destinées à apparaître sur l'écran que comporte classiquement un terminal.

Dans le cas de messages courts de mise à jour de logiciel, il est prévu une intervention d'une source constituée par une plate-forme de programmation 11 qui produit les données correspondant aux informations de mise à jour, par exemple sous forme usuelle d'un lot de données prévu pour au moins un terminal ou plus généralement plusieurs terminaux similairement configurés.

Cette plate-forme 11, qui est apte à communiquer avec le serveur 10, peut être incluse dans le système 1 ou encore lui être extérieure comme schématisé sur la figure 1. Elle est donc agencée pour pouvoir entrer en communication avec l'ensemble de commande et avec les moyens de stockage du serveur 10, soit directement si elle est intégrée dans ce serveur soit via les moyens de communication dont ce serveur dispose.

Selon l'invention et comme déjà indiqué, il est prévu que la mise à jour d'un terminal s'effectue suite à un échange de données, sous forme de messages courts entre la plate-forme de programmation 11 et le terminal 2 par l'intermédiaire du serveur 10, sans imposer une d'intervention de l'utilisateur au niveau du terminal.

Une opération d'identification du ou des terminaux destinés à faire l'objet d'une mise à jour est donc nécessaire. Elle implique donc que soient répertoriés les éléments constitutifs matériels et/ou logiciels, propres aux terminaux du réseau qui sont concernés par une mise à jour, pour que soient déterminés ceux de ces terminaux qui comportent ces éléments et qui sont donc concernés par la mise à jour.

Les opérations nécessaires pour de telles identifications ne sont pas développées ici dans la mesure où elles n'ont qu'un rapport indirect avec l'objet de l'invention. Il suffit de savoir qu'un lien d'identification individuel est défini au niveau du système 1 en tenant compte des données individuelles d'identification et de localisation stockées aux niveaux des bases de données 7 et de l'enregistreur 8 et des données de définition des caractéristiques logicielles et matérielles pour chaque terminal. En effet, il est usuel que ces données de définition relatives aux terminaux ne soient pas ou pas toutes stockées au niveau du système 1, si ce n'est au niveau des terminaux eux-mêmes.

Le procédé de mise à jour selon l'invention implique donc un échange transparent qui est initié pour un terminal dont les caractéristiques logicielles et matérielles présentes ont été obtenues de celui ou de ceux qui les détiennent, afin de pouvoir réaliser une vérification de conformité en liaison avec le terminal où ces caractéristiques sont aussi stockées.

Selon l'invention, une procédure de transfert de données de mise à jour vers un terminal commence par l'envoi d'un message court, dit d'éveil d'agent au terminal destinataire visé, à l'initiative de la plate-forme de programmation 11 et par l'intermédiaire du serveur de messages courts 10. Ce message d'éveil est de type MT (module terminated), par exemple SMS-MT, il comporte un en-tête caractéristique signalant qu'il s'agit d'une opération de mise à jour. Ce message contient éventuellement des données d'affichage permettant de fournir une information sur l'écran du terminal relativement à la mise à jour.

Le message d'éveil contient aussi des données destinées à permettre au terminal de répondre par message court de type MO (mobile originated), par exemple SMS-MO. Ces données fournissent au terminal des indications relatives à l'origine du message qu'il a reçu, dans l'exemple proposé ces données correspondent au numéro du centre serveur de messages courts 10 et celui du service de ce centre qui identifie la plate-forme de programmation 11.

Une opération d'authentification de la plate-forme par le terminal est réalisée.

Un message court d'accusé de réception est transmis en retour vers le centre serveur par le terminal, si le message court d'éveil a été transféré avec succès au terminal destinataire depuis le centre serveur et via la station de base auprès de laquelle ce terminal est localisé. Le procédé est temporairement interrompu par le centre serveur dans les conditions habituelles prévues lorsqu'un terminal est hors d'atteinte ou si le transfert n'a pas été réalisé de manière satisfaisante. Il est notamment interrompu, si l'opération d'authentification de la plate-forme de programmation par le terminal a échoué.

Le message d'accusé de réception produit par un terminal contient le numéro d'appel radiotéléphonique du terminal et la définition synthétique SYNTHER spécifiant ses présentes caractéristiques de configuration, matérielles et logicielles, essentielles. Il peut alternativement être envisagé de ne transmettre qu'une partie de ces caractéristiques, si cela s'avère suffisant.

Ce message d'accusé de réception est transféré par le terminal vers le centre serveur 10, via la station de base 5 auprès de laquelle il est alors radiotéléphoniquement localisé. Ce transfert s'effectue de manière transparente, sans que l'utilisation du terminal par un utilisateur ne soit affectée.

L'envoi d'un ou de plusieurs messages contenant les données de mise à jour peut être effectué par l'intermédiaire du centre serveur, à réception du message d'accusé de réception et après authentification du terminal cible par vérification de la conformité de la définition de configuration SYNTHER reçue du terminal avec celle prise en compte pour ce terminal à l'occasion du lancement de la procédure de transfert. L'en-tête caractéristique de signalisation de la mise à jour est à nouveau transmis vers le terminal 2 dans le cadre du premier message de type MT de transmission des données de mise à jour qu'émet le centre serveur vers ce terminal. Cet en-tête précède des données correspondant à tout ou partie de l'ensemble formé par les données de mise à jour suivant la taille de cet ensemble.

Une autre mise en oeuvre consiste à ne pas procéder à des vérifications de la configuration SYNTHER, mais à décider en fonction de celle-ci de l'opportunité d'une mise à jour. Ainsi, la plate-forme de programmation peut n'avoir aucune connaissance (ou une connaissance partielle) de la configuration d'un parc de terminaux mobiles. Souhaitant en faire une mise à niveau des différentes versions d'un module logiciel (par exemple), on envoi sur le réseau un message d'éveil d'agent comme décrit précédemment. Les terminaux répondent en fournissant leurs configurations SYNTHER. En fonction de ces configurations, la plate-forme peut décider quels terminaux mobiles nécessitent une mise à jour, parmi l'ensemble des terminaux mobiles du parc cible.

Les données de mise à jour sont accompagnées par des données correspondant à la nouvelle définition de configuration SYNTHER établie pour le terminal à partir de la définition jusqu'ici en cours et de la ou des modifications entraînée(s) par la mise à jour, pour enregistrement au niveau du terminal.

Dans l'exemple illustré sur la figure 2, des données supplémentaires sont jointes pour permettre au terminal de vérifier qu'il est bien le destinataire prévu du ou des messages de mise à jour. Ces données supplémentaires de contrôle sont par exemple celles de la définition de configuration SYNTHER telle que préalablement envoyée par le terminal au centre serveur à réception du message d'éveil. Elles sont prises en compte et traitées par l'ensemble de commande du terminal éventuellement en relation avec l'ensemble de commande à processeur et mémoires que comporte le module d'identification alors associé à ce terminal. Les données de mise à jour, reçues dans une mémoire du terminal, sont enregistrées, pour mise en exploitation, en mémoire permanente du terminal et/ou du module d'identification alors associé à ce terminal, lorsque les vérifications effectuées sont satisfaisantes.

Dans une forme de réalisation également illustrée sur la figure 2, un message court d'accusé de bonne réception de mise à jour est transmis par le terminal vers le centre serveur 10, suite à la réussite de la vérification effectuée par ce terminal. Ce message, de type MO, comporte ici des données correspondant au numéro d'appel propre à ce terminal et la nouvelle définition de configuration SYNTHER qui vient d'être reçue du centre serveur par le terminal.

Si l'une des étapes de transmission prévues dans le procédé de mise à jour selon l'invention n'est pas réalisée de manière satisfaisante et risque de conduire à une erreur soit au niveau du terminal, du module d'identification associé à ce terminal ou au niveau du centre serveur et/ou de la plate-forme de programmation concernée, les modifications envisagées ne sont pas effectuées et les données correspondant à la situation précédant la tentative de mise à jour sont conservées jusqu'à réussite d'une nouvelle tentative de mise à jour.

Il est prévu que la réalisation effective d'une opération de mise à jour pour un terminal déterminé soit signalée à l'utilisateur par affichage d'une information appropriée sur l'écran du terminal, si besoin est.

L'exploitation du procédé de mise à jour au profit de terminaux radiotéléphoniques d'un réseau n'implique généralement qu'une programmation additionnelle au niveau des moyens logiciels respectivement prévus dans ces terminaux, pour assurer l'exploitation de la procédure de transmission par messages courts au cours des différentes étapes de déroulement du procédé. De ce fait la structure matérielle d'un terminal 2 n'est pas développée ici dans la mesure où elle est susceptible d'être tout à fait classique et donc bien connue de l'homme de métier.

Il est notamment prévu au moins un agent au niveau du terminal pour repérer le code caractéristique d'un en-tête de mise à jour au niveau d'un message court et pour piloter les opérations réalisées par le terminal pour permettre le déroulement des étapes du procédé de mise à jour.

## Revendications

1. Procédé pour la mise à jour du logiciel d'un terminal radiotéléphonique (2), notamment de type GSM, par l'intermédiaire d'une station de base (5), radiotéléphonique, auprès de laquelle ledit terminal est radiotéléphoniquement localisé, et à partir des données fournies par une plate-forme de programmation (11) intervenant au niveau d'un centre serveur (10) auquel la station de base est reliée dans le cadre d'un réseau de télécommunications, les données de mise à jour du terminal étant transférées par un échange de messages courts, de type SMS ou équivalent, à l'initiative de la plate-forme de programmation et en coopération avec le centre serveur, ce procédé étant caractérisé en ce que ledit échange de messages courts comporte des messages préalables pour l'authentification réciproque dudit terminal cible et de ladite plate-forme de programmation.

2. Procédé selon la revendication 1, dans lequel ledit échange de messages courts comporte les opérations suivantes :
- envoi d'un message court d'éveil d'agent, de type MT, à destination du terminal, ce message comportant un en-tête caractéristique de mise à jour et des données pour le rappel radiotéléphonique de la plate-forme par le terminal;
- envoi d'un accusé de réception par message court, de type MO, à destination de la plate-forme par le terminal, suite à la réception d'un message d'éveil, cet accusé de réception contenant préférablement le numéro d'appel radiotéléphonique du terminal et une définition synthétique (SYNTHER) de la présente configuration matérielle et/ou logicielle du terminal;
- envoi d'un ou de plusieurs messages successifs, de type MT, au terminal pour la transmission de l'information de mise à jour, cet envoi contenant notamment les données de mise à jour, précédées par l'en-tête de mise à jour et par la nouvelle définition synthétique de configuration résultant de la mise à jour.

3. Procédé, selon la revendication 2, dans lequel l'envoi de données effectué par la plate-forme au terminal pour une mise à jour contient aussi la définition synthétique de configuration reçue du terminal.

4. Procédé, selon l'une des revendications 1 à 3, dans lequel il est prévu un envoi par le terminal d'un message d'accusé de réception de mise à jour, de type MO, suite à la mise à jour, ce message comportant préférablement le numéro d'appel radiotéléphonique du terminal accompagné de la nouvelle définition synthétique de configuration reçue dans le cadre de la mise à jour.

5. Terminal radiotéléphonique, de type GSM ou équivalent, caractérisé en ce qu'il comporte des moyens logiciels pour la mise en oeuvre du procédé selon l'une des revendications précédentes 1 à 4.
